(19) Europäisches Patentamt
European Patent Office
Office européen des brevets

(11) **EP 4 546 497 A1**

(12) **EUROPEAN PATENT APPLICATION**
published in accordance with Art. 153(4) EPC

(43) Date of publication:
30.04.2025 Bulletin 2025/18

(21) Application number: 23825379.3

(22) Date of filing: 12.05.2023

(51) International Patent Classification (IPC):
$H01M\ 10/0585^{(2010.01)}$   $H01M\ 4/38^{(2006.01)}$
$H01M\ 10/052^{(2010.01)}$   $H01M\ 10/0562^{(2010.01)}$
$H01M\ 50/136^{(2021.01)}$   $H01M\ 50/474^{(2021.01)}$
$H01M\ 50/477^{(2021.01)}$

(52) Cooperative Patent Classification (CPC):
H01M 4/38; H01M 10/052; H01M 10/0562;
H01M 10/0585; H01M 50/136; H01M 50/474;
H01M 50/477

(86) International application number:
PCT/IB2023/000260

(87) International publication number:
WO 2023/248006 (28.12.2023 Gazette 2023/52)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 22.06.2022 JP 2022100726

(71) Applicants:
• **NISSAN MOTOR CO., LTD.**
  **Kanagawa 221-0023 (JP)**

• **Renault s.a.s**
  **92100 Boulogne Billancourt (FR)**

(72) Inventor: **SASAKI, Tatsuro**
  **Atsugi-shi, Kanagawa 243-0123 (JP)**

(74) Representative: **Grünecker Patent- und
  Rechtsanwälte
  PartG mbB
  Leopoldstraße 4
  80802 München (DE)**

(54) **ALL SOLID STATE BATTERY CELL**

(57)    The purpose of the present invention is to provide an all-solid-state battery cell in which lithium does not leak to the outside even if the lithium has melted. An all-solid-state battery cell according to the present invention comprises an electrode laminate, an exterior body that accommodates the electrode laminate, and a pair of insulating shape maintenance materials that maintain the shape of the exterior body such that a space between the exterior body and the electrode laminate is secured even when the area inside of the exterior body is in a depressurized state, wherein: each of the pair of shape maintenance materials has a flat plate-shaped flat plate part and a side surface part which is bonded to an end of the flat plate part; the flat plate part is located at the outermost part of the electrode laminate in the lamination direction; the outer shape of the flat plate part, when viewed along the lamination direction, is larger than the outer shape of the electrode laminate; and the tip end surface of the side surface part of one of the shape maintenance materials faces the tip end surface of the side surface part of the other of the shape maintenance materials.

**(Cont. next page)**

FIG. 1

**Description**

TECHNICAL FIELD

The present disclosure relates to an all-solid-state battery cell.

BACKGROUND ART

An all-solid-state battery having a configuration in which an electrode laminate is accommodated in an exterior body is known in the art. A disclosure regarding a manufacturing method of such all-solid-state battery is described in Patent Document 1 (JP2017-117696A). In Patent Document 1, a method for manufacturing the all-solid-state battery, which is capable of improving volume energy density while suppressing an occurrence of wrinkles in an exterior body at a part contacting a surface of a lamination direction of a laminate is described. In the above document, a manufacturing method having a process of disposing the laminate within the exterior body, a process of sealing a surrounding part of the laminate disposed in the exterior body in a reduced pressure atmosphere, a process of pressing the exterior body against the lamination direction surface of the laminate using a pressing member while maintaining the reduced pressure atmosphere after the sealing process, and a releasing process of changing the atmosphere from the reduced pressure atmosphere to an atmospheric pressure atmosphere while maintaining the pressing by the pressing member is described.

SUMMARY OF INVENTION

In an all-solid-state battery described in the Patent Document 1, the exterior body is in close contact with the laminate since the laminate disposed in the exterior body is sealed in a reduced pressure atmosphere. That is, substantially no space is formed between the exterior body and the laminate.

By the way, as an all-solid-state battery, a battery using metal lithium as a negative electrode active material is known. In such all-solid-state battery, for example, in an event of a breakdown (short circuit, etc.), there are cases where temperature becomes high enough to melt the metal lithium. As a result, there is a possibility that the molten lithium may flow out. As described in the Patent Document 1, when there is no space between the exterior body and the laminate, there is a possibility that the molten lithium may leak to the outside.

Even when the lithium is melted, it is desirable that the molten lithium does not leak to outside. Accordingly, the purpose of the present disclosure is to provide the all-solid-state battery cell in which the lithium does not leak to the outside even when the lithium is melted.

The all-solid-state battery cell according to the present disclosure includes an electrode laminate, the exterior body, and a pair of shape maintenance materials. The electrode laminate includes a positive electrode, a solid electrolyte layer and a negative electrode, and is configured such that the metal lithium is used as the negative electrode active material. The exterior body is flexible and accommodates the electrode laminate. The pair of shape maintenance materials is provided to be positioned at both ends of the electrode laminate in a lamination direction in the exterior body. The pair of shape maintenance materials maintains a shape of the exterior body such that a space is secured between the exterior body and the electrode laminate even when pressure in an internal region of the exterior body is reduced. The pair of shape maintenance materials each includes a flat plate-shaped flat plate part and a side surface part coupled to an end part of the flat plate part. The flat plate part is disposed at the end part of the electrode laminate in the lamination direction. An outer shape of the flat plate part is larger than that of the electrode laminate when viewed along the lamination direction. A tip end surface of the side surface part of the shape maintenance material on one side and a tip end surface of the shape maintenance material on the other side are facing each other.

BRIEF DESCRIPTION OF DRAWINGS

FIG. 1 is a schematic cross-sectional view showing an all-solid-state battery module according to a first embodiment.
FIG. 2 is a cross-sectional view and a top view schematically showing a configuration of a battery cell.
FIG. 3 is a schematic cross-sectional view showing a configuration of a battery cell when metal lithium is melted.
FIG. 4 is a schematic cross-sectional view showing a battery cell according to a second embodiment.
FIG. 5 is a schematic cross-sectional view showing a battery cell according to a third embodiment.
FIG. 6 is a cross-sectional view and a top view schematically showing a battery cell according to a fourth embodiment.

DESCRIPTION OF EMBODIMENTS

Hereinafter, embodiments of the present disclosure will be described with reference to the drawings.

(First embodiment)

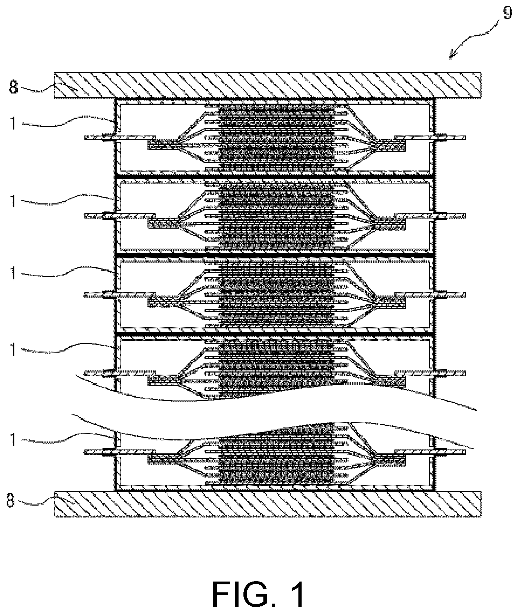

FIG. 1 is a schematic cross-sectional view showing an all-solid-state battery module 9 using an all-solid-state battery cell 1 (hereinafter, sometimes simply referred to as a battery cell 1) according to the present embodiment. As shown in FIG. 1, the all-solid-state battery module 9 includes a plurality of battery cells 1 and a pair of end plates 8. The plurality of battery cells 1 are laminated. The pair of end plates 8 is disposed so that the plurality of laminated battery cells 1 is disposed therebetween in a lamination direction. The pair of end plates 8 is pressed by a pressing mechanism which is not illustrated. As a result, a compressive load is applied to the plurality of battery cells 1.

Here, a configuration of each battery cell 1 is devised in the present embodiment. Hereinafter, the configuration of the battery cell 1 is described.

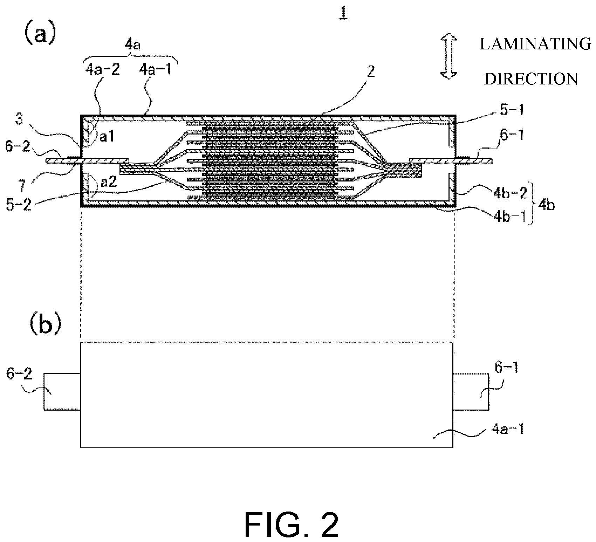

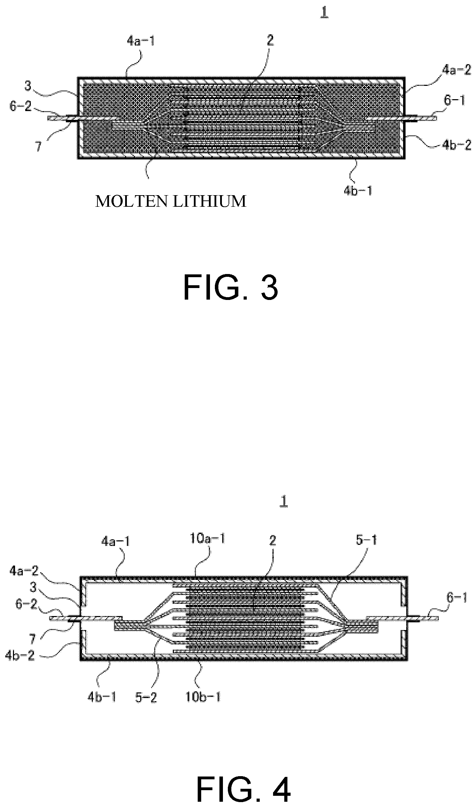

FIG. 2 is a cross-sectional view (a) and a top view (b) schematically showing the configuration of the battery cell 1. Further, FIG. 3 is a schematic cross-sectional view showing the configuration of the battery cell 1 when lithium is melted.

As shown in FIG. 2, the battery cell 1 includes an electrode laminate 2, an exterior body 3, a pair of shape maintenance materials (4a and 4b), and current collecting tabs (6-1 and 6-2). The electrode laminate 2 is disposed in the exterior body 3. The electrode laminate 2 is configured such that metal lithium is used as a negative electrode active material. The pair of shape maintenance materials (4a and 4b) is also disposed in the exterior body 3. The pair of shape maintenance materials (4a and 4b) maintains a shape of the exterior body 3 such that the exterior body 3 does not contact the electrode laminate 2 even when pressure in an internal region of the exterior body 3 is reduced. That is, a space is secured between the exterior body 3 and the electrode laminate 2. Specifically, a space is secured on both sides of the electrode laminate 2 in a direction connecting the current collecting tab (6-1) and the current collecting tab (6-2).

By the configuration described above, even when the metal lithium included in the electrode laminate 2 is melted, the molten lithium is accommodated in the space between the exterior body 3 and the electrode laminate 2 (refer to FIG. 3). Accordingly, the molten lithium is prevented from leaking to the outer side of the exterior body 3.

Hereinafter, each part of the battery cell 1 is described in detail.

The electrode laminate 2 has a structure in which a plurality of units is laminated. Each unit has a positive electrode, a solid electrolyte layer and a negative electrode. The solid electrolyte layer is sandwiched between the positive electrode and the negative electrode. Further, as described above, the electrode laminate 2 is configured such that the metal lithium is used as the negative electrode active material. In such electrode laminate 2, when the temperature becomes very high, there is a possibility that the lithium may melt and leak from the electrode laminate 2 as described above.

Further, in the present disclosure, the "electrode laminate" encompasses a configuration in which the negative electrode is not present at a discharged state and the negative electrode is generated during charging. That is, the electrode laminate 2 may be configured such that in a discharged state, the lithium is not present on the negative electrode side and when charged, the lithium moves from the positive electrode side to the negative electrode side and is deposited, thereby forming the negative electrode.

In the electrode laminate 2, a current collector (5-1 or 5-2) is sandwiched between adjacent units. One of the current collector (5-1) and the current collector (5-2) is a positive electrode current collector, and the other is the negative electrode current collector. The current collectors (5-1 and 5-2) are each provided in plural. The current collectors (5-1 and 5-2) each protrudes from a side of the electrode laminate 2 and is joined at the end to be connected to the current collecting tabs (6-1 and 6-2).

The current collecting tab (6-1) and the current collecting tab (6-2) are provided to electrically connect the electrode laminate 2 to the outside. One end of each current collecting tab (6-1 and 6-2) is disposed on the inside of the exterior body 3, and the other end is disposed on the outside of the exterior body 3.

The exterior body 3 is provided to protect the electrode laminate 2. The exterior body 3 is flexible and accommodates the electrode laminate 2. Specifically, the exterior body 3 is configured by a pair of sheets. The pair of sheets is disposed on an upper side and a lower side of the electrode laminate 2 and is bonded at a sealing part 7 on a side of the electrode laminate 2. Further, a part of the exterior body 3 sandwiches the current collecting tab (6-1) and the collecting tab (6-2). In a part where the current collecting tab (6-1) and the current collecting tab (6-2) are provided, the exterior body 3 is sealed to the current collecting tab (6-1) and the current collecting tab (6-2).

Material of the exterior body 3 is not particularly limited, but for example, an aluminum film, etc. may be used.

The pair of shape maintenance materials (4a and 4b) is provided to secure a space between the exterior body 3 and the electrode laminate 2 even when pressure in the internal region of the exterior body 3 is reduced, as described above. The pair of shape maintenance materials (4a and 4b) is provided so as to be positioned on an outermost part (uppermost part and lowermost part) of both sides of the electrode laminate 2 in the lamination direction.

Specifically, the pair of shape maintenance materials (4a and 4b) has a flat plate part (4a-1, 4b-1) and a side surface part (4a-2, 4b-2), respectively.

Each flat plate part (4a-1, 4b-1) is in a flat plate shape. The flat plate parts (4a-1 and 4b-1) are disposed on an upper surface and a lower surface of the electrode laminate 2. An outer shape of each flat plate part (4a-1, 4b-1) is larger than that of the electrode laminate 2 when viewed along the lamination direction. Further, the outer shape of the electrode laminate 2 described herein refers to the outer shape of a part where the positive electrode, the solid electrolyte layer, and the negative electrode overlap (active area).

Specifically, each flat plate part (4a-1, 4b-1) is generally in a rectangular shape. In a longitudinal direction (a direction connecting the current collecting tab (6-1) and the current collecting tab (6-2)), each flat plate part is larger than the electrode laminate 2. Here, in a short direction, the outer shape of each flat plate part (4a-1, 4b-1) may be larger than or equal to that of the electrode laminate 2.

Each side surface part (4a-2, 4b-2) is coupled to the end part of each flat plate part (4a-1, 4b-1) and extends upward from each flat plate part (4a-1, 4b-1). The side surface part (4a-2) and the side surface part (4b-2) are disposed so that their tip end surfaces are facing each other. In other words, the tip end surface of the side surface part (4a-2) and the tip end surface of the side surface part (4b-2) overlap in the lamination direction.

Here, each shape maintenance material (4a, and 4b) is formed of an insulating material. Further, each shape maintenance material (4a, and 4b) is formed of a material having a strength that does not deform even when pressure in the internal region of the exterior body 3 is reduced. Further, each shape maintenance material (4a and 4b) is formed of a heat-resistant material that is not damaged even when exposed to a high temperature to an extent that the metal lithium melts. For such material, for example, a heat-resistant resin may be used.

As described above, in the present disclosure, a space is secured in the side direction of the electrode laminate 2 by the pair of shape maintenance materials (4a and 4b). As a result, even when the metal lithium melts, the molten lithium is accommodated in the corresponding space. Accordingly, it becomes difficult for the molten lithium to leak to the outer side of the exterior body 3.

Subsequently, an example of the manufacturing method of the battery cell 1 according to the present embodiment is described. When manufacturing the above described battery cell 1, the electrode laminate 2 is manufactured first, and then the current collectors (5-1 and 5-2) are connected to the current collecting tabs (6-1 and 6-2). Subsequently, the pair of shape maintenance materials (4a and 4b) is disposed above and below the electrode laminate 2. In addition, the pair of sheets for forming the exterior body 3 is disposed to cover the pair of shape maintenance materials (4a and 4b). Next, the pair of sheets is pressed while reducing the pressure in the inner side region of the pair of sheets, and the pair of sheets is sealed in the sealing part 7. As a result, the battery cell 1 is obtained. Here, when reducing the pressure, the sheet forming the exterior body 3 is sucked to the inner side. Therefore, an extra space may be removed, and the size of the battery cell 1 may be reduced. Meanwhile, since the pair of shape maintenance materials (4a and 4b) is provided, a space is secured in the side direction of the electrode laminate 2.

Further, in the present disclosure, a space is formed in the side direction of the electrode laminate 2. Preferably, a space is formed on a side where the current collecting tab (6-1) and the current collecting tab (6-2) are provided in the side direction of the electrode laminate 2. Here, volumetric energy density of the battery cell 1 is reduced according to this space. However, as shown in FIG. 1, the all-solid-state battery is generally provided as the all-solid-state battery module 9 in which the plurality of battery cells 1 is laminated. In the all-solid-state battery module 9, a region toward the side of each battery cell 1 is a dead space as the current collecting tab or the like is generally disposed therein. Accordingly, even when the space is formed in the side direction of the battery cell 1 (specifically, towards the current collecting tab side) the volumetric energy density as the all-solid-state battery module 9 does not substantially change. That is, there are no drawbacks caused by formation of an excess space.

By the way, in order to efficiently proceed with a battery reaction in the all-solid-state battery, a load needs to be applied to the electrode laminate 2. Therefore, preferably, the lengths of the side surface parts (4a-2 and 4b-2) are devised so that pressure (load) is applied to the electrode laminate 2. Specifically, sum of the lengths (a1 and a2 in FIG. 2) of the side surface parts (4a-2 and 4b-2) along the lamination direction is set to be less than or equal to the thickness of the electrode laminate 2 when a state of charge (SOC) is 0%. "SOC" is a parameter indicating charging status of the electrode laminate 2. The SOC at 0% refers to a completely discharged state. The electrode laminate 2 using the metal lithium as the negative electrode active material expands when charging and contracts when discharging. That is, the thickness of the electrode laminate 2 becomes smallest when in the completely discharged state. Since the total length (a1+a2) of the side surface parts (4a-2 and 4b-2) is set to be less than or equal to the thickness of the electrode laminate 2 when the SOC is 0%, a gap is formed between the side surface part (4a-2) on one side and the side surface part (4b-2) on the other side except in the case of being completely discharged (refer to FIG. 2). Accordingly, the shape maintenance material (4a) on one side and the shape maintenance material (4b) on the other side do not interfere. The pressure applied to the battery cell 1 is applied to the electrode laminate 2 via each shape maintenance material (4a and 4b). Since pressure application is not hindered by each shape maintenance material (4a and 4b), the battery reaction is also not hindered.

More preferably, the sum (a1+a2) of the lengths of the side surface parts (4a-2 and 4b-2) is set to be equal to the thickness of the electrode laminate 2 when the SOC is 0%. Further, the term "equal" herein also includes an idea of "approximately equal". By adopting such configuration, it is possible to prevent the molten lithium from leaking to the outside of the exterior body 3 more reliably. That is, when the lithium melts and leaks from the electrode laminate 2, the thickness of electrode laminate 2 decreases. When the sum (a1+a2) of the lengths of the side surface parts (4a-2 and 4b-2) is equal to the thickness of the electrode laminate 2 when the SOC is 0%, the gap between the side surface part (4a-2) and the side surface part (4b-2) is closed (refer to FIG. 3) when the thickness of the electrode laminate 2 is reduced by melting of the lithium. As a result, it becomes difficult for the molten lithium to reach the sealing part 7 through which leakage easily occurs, thereby preventing leakage of the lithium more reliably.

Preferably, size of the excess space formed in the inner side of the exterior body 3 is larger than the volume when the metal lithium present in a fully charged state is melted. By adopting such configuration, all of the molten lithium will be accommodated in the space on the inner side of the exterior body 3 even when all of the metal lithium is melted. Here, volume $V_{Li}$(cm$^3$) of the molten metal lithium may be calculated by the following equation.

[Equation 1]

$$v_{Li} = \frac{3600 * Q * r}{F} * M / d_l$$
$$= 0.506 * Q * r$$

In the above equation, Q is cell capacity (Ah). r is A/C ratio. F is the Faraday constant, which is $9.65 \times 10^4$[C/mol]. M is molar mass of lithium, which is 6.94 [g/mol]. d1 is density of the molten lithium, which is 0.512[g/cm$^3$].

The first embodiment has been described above. Hereinafter, a representative example of the configuration and an operational effect according to the present embodiment will be summarized.

The battery cell 1 according to the present embodiment has the electrode laminate 2, the exterior body 3 and the pair of insulating shape maintenance materials (4a and 4b). The electrode laminate includes the positive electrode, the solid electrolyte layer and the negative electrode, and is configured such that the metal lithium is used as the negative electrode active material. The exterior body 3 is flexible and accommodates the electrode laminate 2. The pair of shape maintenance materials (4a and 4b) is provided so as to be positioned on an outermost part (uppermost part and lowermost part) of both sides of the electrode laminate 2 in the lamination direction in the exterior body 3. Further, the pair of shape maintenance materials (4a and 4b) maintains the shape of the exterior body 3 such that the space between the exterior body 3 and the electrode laminate 2 is secured even when pressure in the internal region of the exterior body 3 is reduced. The pair of shape maintenance materials (4a and 4b) each has the flat plate-shaped flat plate part (4a-1, 4b-1) and the side surface part (4a-2, 4b-2) coupled to the end part of the flat plate parts (4a-1, 4b-1). The flat plate parts (4a-1, 4b-1) are positioned on the outermost part of the electrode laminate 2 in the lamination direction. The outer shapes of the flat plate parts (4a-1, 4b-1) are larger than the outer shape of the electrode laminate 2 when viewed along the lamination direction. The tip end surface of the side surface part (4a-2) of the shape maintenance material (4a) on one side and the tip end surface of the shape maintenance material (4b) on the other side are facing each other. According to such configuration, since a space is formed between the exterior body 3 and the electrode laminate 2, even when the metal lithium melts, the lithium is accommodated in the space and does not leak to the outside of the exterior body 3.

According to a preferred embodiment, the sum of the lengths in the lamination direction of the side surface parts (4a-2, 4b-2) in the pair of shape maintenance materials (4a and 4b) is less than or equal to the thickness of the electrode laminate 2 when the SOC is 0%. By adopting such configuration, the pair of shape maintenance materials (4a and 4b) does not interfere with each other. The pressure for pressing the battery cell 1 is not prevented by the pair of shape maintenance materials (4a and 4b) and is also applied to the electrode laminate 2. Accordingly, the battery reaction progress is not prevented.

According to a preferred embodiment, the sum of the lengths in the lamination direction of the side surface parts (4a-2, 4b-2) in the pair of shape maintenance materials (4a and 4b) is equal to the thickness of the electrode laminate 2 when the SOC is 0%. By adopting such configuration, the gap between the side surface parts (4a-2 and 4b-2) is closed when the molten metal lithium leaks from the electrode laminate 2. Accordingly, it becomes more difficult for the molten metal lithium to leak to the outside of the exterior body 3.

According to a preferred embodiment, the excess space is formed larger in the inner side of the exterior body 3 than the volume when the metal lithium present in a fully charged state is melted. By adopting such configuration, all of the molten lithium may be accommodated in the excess space even when all of the metal lithium included in the electrode laminate 2 is melted. Accordingly, it is possible to prevent the molten metal lithium from leaking to the outside of the exterior body 3 more reliably.

(Second embodiment)

Subsequently, the second embodiment will be described. Detailed description of components that may adopt the same configuration as in the first embodiment are omitted in the following description.

FIG. 4 is a schematic cross-sectional view showing a battery cell 1 according to the second embodiment. In the present embodiment, an exterior body 3 and each flat plate part (4a-1 and 4b-1) are bonded. In FIG. 4, a bonding area is illustrated as bonding parts (10a-1 and 10b-1). According to such configuration, the exterior body 3 and the flat plate parts (4a-1 and 4b-1) do not slip even when the battery cell 1 is pressed. Accordingly, it is difficult for wrinkles to occur on the exterior body 3.

Further, entire surface of each flat plate part (4a-1 and 4b-1) may be bonded to the exterior body 3, or only a part of each flat plate part may be bonded to the exterior body 3.

According to a preferred embodiment, the exterior body 3 is bonded to each flat plate part (4a-1 and 4b-1), while not bonded to each side surface part (4a-2 and 4b-2). According to such configuration, the exterior body 3 may bend outward in a side direction of an electrode laminate 2 when the electrode laminate 2 shrinks. Therefore, expansion and contraction of the electrode laminate 2 may be made to follow the exterior body 3.

(Third embodiment)

Subsequently, the third embodiment will be described. Detailed description of components that may adopt the same configuration as in the above described embodiments are omitted in the following description.

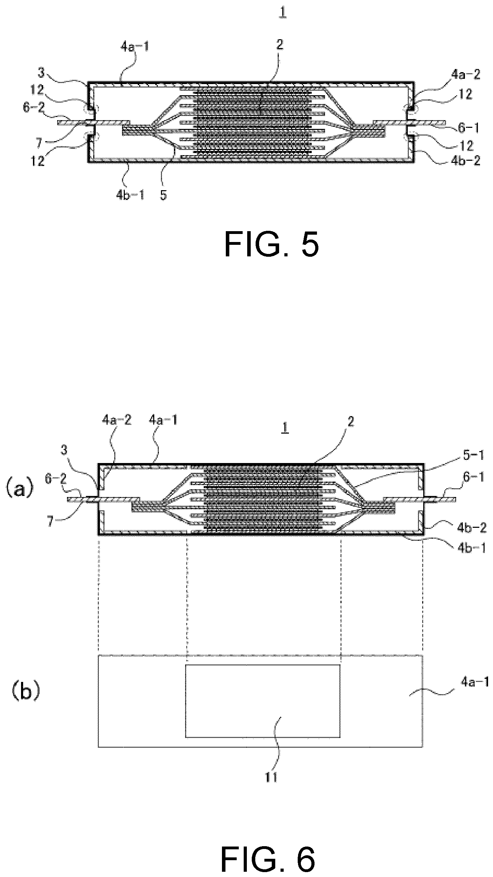

FIG. 5 is a schematic cross-sectional view showing a battery cell 1 according to the third embodiment. In the present embodiment, a gap is formed between a side surface part (4a-2) and a side surface part (4b-2) (the gap may be closed when completely discharged). That is, sum of the lengths of the side surface parts (4a-2 and 4b-2) along a lamination direction is less than or equal to thickness of an electrode laminate 2 when SOC is 0%.

An exterior body 3 is bonded to a tip end surface of the side surface parts (4a-2 and 4b-2). In FIG. 5, this bonding area is illustrated as a bonding part 12.

As a result of the exterior body 3 being bonded to the tip end surface of each side surface part (4a-2, 4b-2), the exterior body 3 is formed into an inwardly concave shape between each side surface part (4a-2, 4b-2) and a sealing part 7. That is, the exterior body 3 is bonded to a pair of shape maintenance materials (4a and 4b) so as to wrap each side surface part (4a-2, 4b-2) around.

According to the present embodiment, the exterior body 3 may be bent between the side surface part (4a-2) and the side surface part (4b-2). Therefore, expansion and contraction of the electrode laminate 2 is formed to easily follow the exterior body 3. Here, when the electrode laminate 2 contracts, the exterior body 3 bends to the inner side rather than the outer side. Accordingly, an area of the battery cell 1 does not increase when viewed along the lamination direction during contraction. Accordingly, it is desirable from a perspective of space saving.

Further, according to the present embodiment, the exterior body 3 may or may not be bonded to each flat plate part (4a-1 and 4b-1). In a preferred embodiment, they are bonded.

Further, the exterior body 3 may or may not be bonded to an outer surface of each side surface part (4a-2 and 4b-2). In a preferred embodiment, they are not bonded.

(Fourth embodiment)

Subsequently, the fourth embodiment will be described. Detailed description of components that may adopt the same configuration as in the above described embodiments are omitted in the following description.

FIG. 6 is a cross-sectional view (a) of a battery cell 1 according to the fourth embodiment, and a top view (b) showing a shape of a flat plate part (4a-1). According to the present embodiment, an opening part 11 is provided on each flat plate part (4a-1 and 4b-1).

According to the present embodiment, weight reduction of each shape maintenance material (4a and 4b) may be achieved as the opening part 11 is provided. As a result, gravimetric energy density of the battery cell 1 may be improved.

Position of the opening part 11 is not particularly limited. However, preferably, the opening part 11 has a larger outer shape than that of an electrode laminate 2 when viewed along the lamination direction. In other words, the outer shape of the opening part 11 is positioned further outward than the outer shape of the electrode laminate 2 when viewed along the lamination direction.

As described above, each shape maintenance material (4a and 4b) does not interfere with the electrode laminate 2 since the outer shape of the opening part 11 is larger than that of the electrode laminate 2. An upper surface and a lower surface of the electrode laminate 2 are in direct contact with an exterior body 3. Position of an outer surface of each shape maintenance material (4a and 4b) in a thickness direction is aligned with positions of the upper surface and the lower surface of the electrode laminate 2. Therefore, the thickness of the battery cell 1 in the lamination direction does not increase even though the pair of shape maintenance materials (4a and 4b) is provided. Accordingly, volumetric energy density is not reduced.

Further, when the outer shape of the opening part 11 is larger than that of the electrode laminate 2, the pair of shape maintenance materials (4a and 4b) may not be supported depending on the electrode laminate 2. However, by bonding the flat plate parts (4a-1 and 4b-1) to the exterior body 3, the pair of shape maintenance materials (4a and 4b) may be supported by the exterior body 3.

Embodiments of the present disclosure were described above, but the above embodiments are merely examples of applications of the present disclosure, and the technical scope of the present disclosure is not limited to the specific constitutions of the above embodiments.

Further, this application claims priority based on Japanese Patent Application 2022-100726, filed with the Japan Patent Office on June 22, 2022, and the entire contents of this application are incorporated herein by reference.

## Claims

1. An all-solid-state battery cell comprising:

   an electrode laminate including a positive electrode, a solid electrolyte layer and a negative electrode, wherein metal lithium is used as a negative electrode active material;
   an exterior body having flexibility and accommodating the electrode laminate; and
   a pair of insulating shape maintenance materials arranged in the exterior body, provided so as to be positioned at an outermost part of both sides of the electrode laminate in a lamination direction and configured to maintain a shape of the exterior body such that a space is secured between the exterior body and the electrode laminate even when pressure in an internal region of the exterior body is reduced,
   wherein each of the pair of shape maintenance materials has
   a flat plate-shaped flat plate part, and
   a side surface part coupled to an end part of the flat plate part,
   the flat plate part is positioned at the outermost part of the electrode laminate in the lamination direction,
   an outer shape of the flat plate part is larger than that of the electrode laminate when viewed along the lamination direction, and
   a tip end surface of the side surface part of the shape maintenance material on one side and a tip end surface of the shape maintenance material on the other side are facing each other.

2. The all-solid-state battery cell of claim 1, wherein an opening part is formed on the flat plate part.

3. The all-solid-state battery cell of claim 2, wherein an outer shape of the opening part is positioned further outward than an outer shape of the electrode laminate when viewed along the lamination direction.

4. The all-solid-state battery cell of claim 1 or 2, wherein the exterior body is bonded to the flat plate part.

5. The all-solid-state battery cell of claim 4, wherein the exterior body is not bonded to the side surface part.

6. The all-solid-state battery cell of claim 1 or 2, wherein the exterior body is bonded to the tip end surface of the side surface part.

7. The all-solid-state battery cell of claim 1 or 2, wherein, in the pair of shape maintenance materials, sum of lengths of the side surface part along the lamination direction is less than or equal to thickness of the electrode laminate when a state of charge (SOC) is 0%.

8. The all-solid-state battery cell of claim 1 or 2, wherein, in the pair of shape maintenance materials, sum of lengths of the side surface part along the lamination direction is equal to thickness of the electrode laminate when SOC is 0%.

9. The all-solid-state battery cell of claim 1 or 2, wherein an excess space bigger than volume when the metal lithium present in a fully charged state is melted is formed on an inner side of the exterior body.

FIG. 1

FIG. 2

## FIG. 3

MOLTEN LITHIUM

## FIG. 4

FIG. 5

FIG. 6

<center>**INTERNATIONAL SEARCH REPORT**</center>

| International application No. |
|---|
| **PCT/IB2023/000260** |

## A.  CLASSIFICATION OF SUBJECT MATTER

*H01M 10/0585*(2010.01)i; *H01M 4/38*(2006.01)i; *H01M 10/052*(2010.01)i; *H01M 10/0562*(2010.01)i; *H01M 50/136*(2021.01)i; *H01M 50/474*(2021.01)i; *H01M 50/477*(2021.01)i
FI:   H01M10/0585; H01M4/38 Z; H01M10/052; H01M10/0562; H01M50/136; H01M50/474; H01M50/477

According to International Patent Classification (IPC) or to both national classification and IPC

## B.  FIELDS SEARCHED

Minimum documentation searched (classification system followed by classification symbols)

H01M10/0585; H01M4/38; H01M10/052; H01M10/0562; H01M50/136; H01M50/474; H01M50/477

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)



## C.  DOCUMENTS CONSIDERED TO BE RELEVANT

| Category* | Citation of document, with indication, where appropriate, of the relevant passages | Relevant to claim No. |
|---|---|---|
| X | JP 2008-140633 A (NISSAN MOTOR CO., LTD.) 19 June 2008 (2008-06-19)<br>     paragraphs [0006], [0010]-[0012], [0019], [0050], [0056], [0088], [0096], fig. 1A, 1E, 6B, 6C, 7A | 1-5, 7-8 |
| A | | 6, 9 |
| X | WO 2021/124695 A1 (PANASONIC INTELLECTUAL PROPERTY MANAGEMENT CO., LTD.) 24 June 2021 (2021-06-24)<br>     paragraphs [0056], [0066], [0069]-[0074], [0076], [0079], [0088], fig. 4 | 1, 4-5, 8 |
| A | | 6, 9 |
| X | JP 2021-174621 A (PANASONIC INTELLECTUAL PROPERTY MANAGEMENT CO., LTD.) 01 November 2021 (2021-11-01)<br>     paragraphs [0045], [0054], [0132], [0158], [0160], fig. 1, 8, 12B | 1, 4-5, 8 |
| A | | 6, 9 |
| A | JP 2019-057436 A (HITACHI ZOSEN CORP.) 11 April 2019 (2019-04-11)<br>     claim 1, paragraph [0010], fig. 1-4 | 1-9 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<center>13</center>

<table>
<tr><td colspan="2" style="text-align:center">**INTERNATIONAL SEARCH REPORT**</td><td>International application No.<br>**PCT/IB2023/000260**</td></tr>
</table>

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2020-0039586 A (UBATT INC.) 16 April 2020 (2020-04-16)<br>paragraphs [0016], [0029], fig. 3, 5 | 1-9 |

Form PCT/ISA/210 (second sheet) (January 2015)

**INTERNATIONAL SEARCH REPORT**
Information on patent family members

International application No.

**PCT/IB2023/000260**

| Patent document cited in search report | | | Publication date (day/month/year) | Patent family member(s) | Publication date (day/month/year) |
|---|---|---|---|---|---|
| JP | 2008-140633 | A | 19 June 2008 | (Family: none) | |
| WO | 2021/124695 | A1 | 24 June 2021 | US 2022/0285727 A1 paragraphs [0065], [0075], [0078]-[0083], [0088], [0097], fig. 4 CN 113711425 A | |
| JP | 2021-174621 | A | 01 November 2021 | (Family: none) | |
| JP | 2019-057436 | A | 11 April 2019 | WO 2019/059002 A1 | |
| KR | 10-2020-0039586 | A | 16 April 2020 | WO 2020/071838 A1 | |

Form PCT/ISA/210 (patent family annex) (January 2015)

**EP 4 546 497 A1**

**REFERENCES CITED IN THE DESCRIPTION**

**Patent documents cited in the description**

- JP 2017117696 A
- JP 2022100726 A